# EUROPEAN PATENT SPECIFICATION

(11) **EP 2 562 009 B1**
(45) Date of publication and mention of the grant of the patent: **06.12.2017**
(21) Application number: 12181588.0
(22) Date of filing: 23.08.2012
(51) Int. Cl.: B60C 19/00, B60C 19/12, C08K 3/04, C08K 3/06, B29D 30/06

(54) **Pneumatic tire and method for manufacturing the same**
Luftreifen und Herstellungsverfahren dafür
Pneu et son procédé de fabrication

(30) Priority: 26.08.2011 KR 20110085897
(43) Date of publication of application: 27.02.2013
(73) Proprietor: Hankook Tire Co., Ltd, Seoul 135-723 (KR)
(72) Inventor: Song, Dong Hyun, 305-725 Daejeon (KR)
(74) Representative: McCartney, Jonathan William

(56) References cited:
- EP-A1- 2 006 125
- JP-A- 2011 020 479
- US-A1- 2003 150 544
- US-A1- 2010 307 655

## Description

### BACKGROUND OF THE INVENTION

### Field of the Invention

The present invention relates to a pneumatic tire and a method for manufacturing the same. More specifically, the present invention relates to a pneumatic tire capable of reducing internal noise by distributing noise energy causing generation of resonance in the tire, or changing generated frequency without a risk of shear deformation generated between a sound-absorbing material and the tire, and a method for manufacturing the same.

### Description of the Related Art

Resonance sound in a tire is noise generated in the tire and this noise is of great interest to vehicle and tire companies. In case of air-filled tires, such noise is transferred via vehicle route due to variation in pressure caused by irregular shape of a road surface during travelling on a rough road surface, and sound having sharp peaks is generated in vehicles, causing driver discomfort and deterioration in ride comfort. In accordance with the trends toward low flatness and increase in inch in specification of tires mounted on vehicles, resonance sound in tires is becoming a more important issue.

In order to reduce resonance sound in tires, conventional various tires capable of reducing noise have been suggested. Specifically, Korean Patent Laid-open No. 2006-125502 (Patent document 1) discloses a method for mounting a specific sponge capable of absorbing noise in tires. Korean Patent Laid-open No. 2005-102110 (Patent document 2) discloses a method for reducing noise by mounting a ring in tires or wheel rims to change the internal area of the tire, or adhering fur or the like to the surface of wheels.

In another method, Japanese Patent Publication 2002-240507 (Patent document 3) discloses a method for reducing a tire resonance noise by mounting a spherical sound-absorbing material having a size of 40 to 100 mm in the tire such that the sound-absorbing material is not fixed thereon. The method is suitable for the specification of tires for vehicles and does not require adhesion to prevent heat generation, but problems such as deformation or unbalance of spherical shape may occur, when the tire rotates in a state in which the material is not fixed in the tire.

Further, Korean Patent Laid-open No. 2009-18418 (Patent document 4) discloses a method for reducing tire noise by adhering a sound-absorbing material having a size corresponding to 1/4 or 1/8 of the circumferential direction of the tire to the outer surface of inner liner in the tire. In this case, there is inconvenience in that the sound-absorbing material should be adhered two or more times.

JP-A-2011-020479, corresponding with the preamble of claim 1, describes a sound controlling body made of a sponge material which is glued to the tread inner surface of a tire using a viscous sealing agent. The sound controlling body includes a sealing agent permeated layer of the sponge material into which the viscous sealing agent J is permeated and a sound controlling layer into which the viscous sealing agent is not permeated. A sealing layer made of the viscous sealing agent is formed between the sealing agent permeated layer and the tread inner surface.

EP-A-2006125 describes a vehicle pneumatic tire having a sound-absorbing foam ring adhesively attached at a running slat facing the inner surface. Automatically sealing sealant is applied at the foam ring, to adhere the foam ring with required adhesiveness. The sealant is a polyurethane gel, and a viscous mixture of base of a butyl rubber, a polybutene or base of silicon.

US-A-2003150544 describes a self-seal tire having a puncture sealing layer located all over a tire inner wall surface from one shoulder portion to the other shoulder portion of a pneumatic tire. The puncture sealing layer comprises at least one band-shape seal layer, which includes a band-shape sponge layer and a bonding layer, the band-shape sponge layer being impregnated with an adhesive so that it is exposed on a tier wall surface side face of the band-shape sponge layer and spaced apart from a tire counter wall surface side face thereof, and the bonding layer being made of adhesive and provided on the tire wall surface side face. The band-shape seal layer is bonded through the bonding layer on the tire inner wall surface with the band-shape seal layer being wound in a circumferential direction of the tire.

US-A-2010307655 describes a pneumatic tire including a sealant layer formed from a sealant fluid having adhesive properties that is provided on a tire inner circumferential surface corresponding with a tread portion; and a sound absorbing layer formed from a porous material that is provided via a barrier layer impermeable to the sealant fluid on an inner circumferential surface of the sealant layer; wherein a width W1 of the sound absorbing layer in a tire width direction is from 50 to 90% of a width W2 of the sealant layer in the tire width direction.

### Related art

### Patent document

Korean Patent Laid-open No. 2006-125502 (Published on December 6, 2006)
Korean Patent Laid-open No. 2005-102110 (Published on October 25, 2005)
Japanese Patent Publication No. 2002-240507 (Published on August 28, 2002)
Korean Patent Laid-open No. 2009-18418 (Published on February 20, 2009)

### SUMMARY OF THE INVENTION

It is one aspect of the present invention to provide a pneumatic tire capable of reducing internal noise by distributing noise energy causing generation of resonance in the tire, or changing generated frequency without a risk of shear deformation generated between the sound-absorbing material and the tire.

It is another aspect of the present invention to provide a method for manufacturing the pneumatic tire through a simple process.

In accordance with one aspect of the present invention, provided is a pneumatic tire comprising: a porous sound-absorbing material adhered via a sealant layer to the inside surface of an inner liner, wherein the sealant layer comprises 100 to 400 parts by weight of polyisobutylene, 10 to 100 parts by weight of an inorganic additive and 1 to 15 parts by weight of a vulcanizing agent, with respect to 100 parts by weight of a butyl rubber.

The polyisobutylene may have a weight average molecular weight of 1000 to 3000 g/mol.

The inorganic additive may be selected from the group consisting of carbon black, silica, calcium carbonate, calcium silicate, magnesium oxide, aluminum oxide, barium sulfate, talc, mica and mixtures thereof.

The sealant layer may have a thickness of 1 to 5 mm.

A thickness ratio of the sealant layer and the porous sound-absorbing material may be 1:1 to 1:3.

The porous sound-absorbing material may be selected from the group consisting of sponge, a polyester-based non-woven fabric, a polystyrene-based non-woven fabric and a laminate thereof.

In accordance with another aspect of the present invention, provided is a method for manufacturing a pneumatic tire, comprising: producing a sound-absorbing member for reducing noise comprising a sound-absorbing material, a sealant layer and a release paper laminated in this order; and removing the release paper from the sound-absorbing member for reducing noise and adhering the sound-absorbing member to the inside surface of the tire such that the sound-absorbing member faces the sealant layer, wherein the sealant layer comprises 100 to 400 parts by weight of polyisobutylene, 10 to 100 parts by weight of an inorganic additive and 1 to 15 parts by weight of a vulcanizing agent, with respect to 100 parts by weight of a butyl rubber.

The sound-absorbing member for reducing noise may be produced by a production method comprising mixing butyl rubber, polyisobutylene, an inorganic additive and a vulcanizing agent to prepare a composition for forming the sealant, applying the composition for forming the sealant to one surface of the porous sound-absorbing material to form a sealant layer, and laminating the release paper on the sealant layer.

The sealant layer may be produced by cross-linking the composition for forming the sealant at a temperature of 140 to 180°C.

The release paper may be paper or a polyester film coated with polyethylene or silicone as a releasing agent.

Details of embodiments of the present invention are included in the following description of the invention.

### BRIEF DESCRIPTION OF THE DRAWINGS

These and/or other aspects of the invention will become apparent and more readily appreciated from the following description of the embodiments, taken in conjunction with the accompanying drawings of which:
FIG. 1 is a side sectional view illustrating a pneumatic tire according to one embodiment of the present invention;
FIG. 2 is a schematic view illustrating a configuration of a sound-absorbing member for reducing noise used for production of pneumatic tires according to another embodiment of the present invention;
FIG. 3 is a graph showing an observation result of prevention effect of resonance sound of tire produced in Example, in Experimental Example 1;
FIG. 4A is a graph showing an observation result of vertical force in the tire in Experimental Example 2 during cleat impact testing of the tire produced in Example; and
FIG. 4B is a graph showing an observation result of tangential force in the tire in Experimental Example 2 during cleat impact testing of the tire produced in Example.

### DETAILED DESCRIPTION OF THE INVENTION

Hereinafter, embodiments will be described in detail to an extent such that the embodiments may be easily executed by the person having a common knowledge in the art to which the present invention belongs. However, the present invention may be implemented as a variety of different modifications and is not limited to embodiments and drawings described herein.

When a sound-absorbing material is generally mounted in tires, the sound-absorbing material is adhered thereto and fixed thereon using a peroxide-based adhesive, a volatile adhesive or the like. However, the peroxide-based adhesive or volatile adhesive is readily detached due to extension and contraction of an adhesion site or heat generated while tires travel.

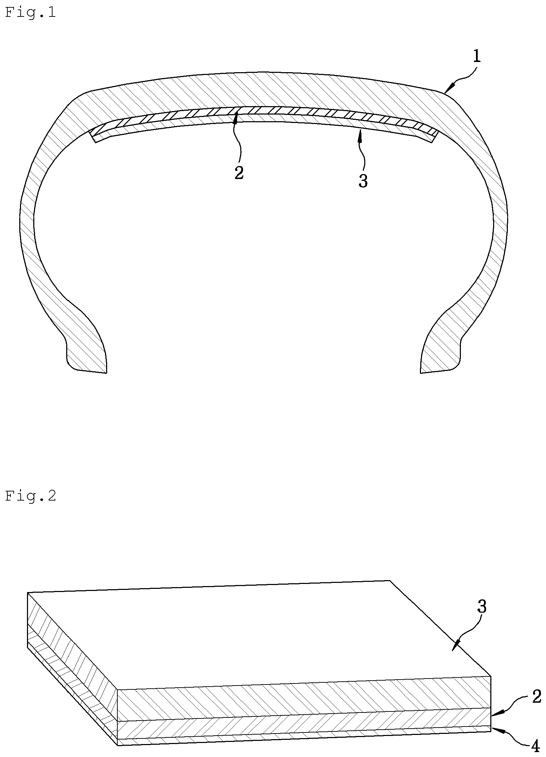

Accordingly, the inventors of the present invention discovered that, in a pneumatic tire including a tread, a side wall, a bead, an inner liner and the like, noise generated by resonance and vibration of vehicle tires can be effectively reduced and shear deformation or the like, generated between the sound-absorbing material and the tire, can be compensated by sticking a sound-absorbing material to the inside surface of the liner using a sealant having a considerably high adhesive force. The present invention was completed based on this discovery. FIG. 1 is a side sectional view illustrating a pneumatic tire according to one embodiment of the present invention. Referring to FIG. 1, the pneumatic tire 1 according to the present invention includes a porous sound-absorbing material 3 adhered to the inside surface of an inner liner through a sealant layer 2.

The porous sound-absorbing material 3 serves to reduce resonance noise generated in tires, is composed of a porous member and is strongly adhered thereto via the sealant layer 2 having a considerably high adhesive force.

The porous sound-absorbing material 3 may be a porous member commonly used as a sound-absorbing material. Specifically, the porous sound-absorbing material 3 may be selected from the group consisting of a sponge, a polyester-based non-woven fabric, a polystyrene-based non-woven fabric and a laminate thereof.

Preferably, the sound-absorbing material has a thickness of 1 to 15 mm and a width of 100 to 120% with respect to a width of the tire tread.

The sealant layer 2 contains a butyl rubber, polyisobutylene, an inorganic additive and a vulcanizing agent and further optionally contains other additives.

The polyisobutylene preferably has a weight average molecular weight of 1,000 to 3,000 g/mol.

Also, the polyisobutylene may be present in an amount of 100 to 400 parts by weight, with respect to 100 parts by weight of the butyl rubber. When the content of polyisobutylene is lower than 100 parts by weight, temperature stability may be deteriorated and when the content exceeds 400 parts by weight, adhesion and buffer effects of sealant may be deteriorated. Specifically, in order to improve adhesion and buffer effects of sealant, the polyisobutylene is preferably used in an amount of 100 to 400 parts by weight, with respect to 100 parts by weight of the butyl rubber, and in order to improve temperature stability together with it, the polyisobutylene is preferably used in an amount of 200 to 300 parts by weight.

The inorganic additive aims to control heat generation of the sealant and is selected from the group consisting of carbon black, silica, calcium carbonate, calcium silicate, magnesium oxide, aluminum oxide, barium sulfate, talc, mica and mixtures thereof. At this time, the inorganic additive is present in an amount of 10 to 100 parts by weight, preferably 30 to 50 parts by weight, with respect to 100 parts by weight of the butyl rubber.

Also, the vulcanizing agent facilitates cross-linkage of the sealant and is present in an amount of 1 to 15 parts by weight, preferably, 5 to 10 parts by weight, with respect to 100 parts by weight of the butyl rubber.

The vulcanizing agent may be a sulfur-based vulcanizing agent, organic peroxide, a resin vulcanizing agent, or metal oxide such as magnesium oxide. The sulfur-based vulcanizing agent may be an inorganic vulcanizing agent such as powdered sulfur (S), insoluble sulfur (S), precipitated sulfur (S) and colloidal sulfur.

When the contents of butyl rubber, polyisobutylene, inorganic additive and the vulcanizing agent are out of the defined ranges, the sealant layer is not adhered to the porous sound-absorbing material, or the sealant layer may flow out while tires travel.

Further, the sealant layer may further contain other additives selected from the group consisting of cross-linking promoters, vulcanization promotion accelerators, adhesives and mixtures thereof.

The cross-linking promoter for facilitation of cross-linkage is selected from the group consisting of sulfenamide, tiazol, tiuram, thiourea, guanidine, dithiocarbamic acid, aldehyde-amine, aldehyde-ammonia, imidazoline, xanthate and combinations thereof. In this case, the cross-linking promoter may be present in an amount of 0 to 10 parts by weight, preferably 3 to 5 parts by weight, with respect to 100 parts by weight of the butyl rubber.

The vulcanization promotion accelerator is an additive used to obtain complete facilitation effects when used in conjunction with the vulcanization accelerator. For example, a combination of zinc oxide and stearic acid may be used. In the case in which zinc oxide is used in conjunction with the stearic acid, in order to realize suitable function of the vulcanization promotion accelerator, zinc oxide and stearic acid are used in amounts of 1 to 5 parts by weight and 0.5 to 3 parts by weight, with respect to 100 parts by weight of the butyl rubber.

Also, as the adhesive to improve adhesive force of the sealant, a natural resin such as phenol resin, rosin resin or terpene resin, or a synthetic resin such as petroleum resin, coal tar or alkyl phenol resin may be used. The adhesive may be present in an amount of 0 to 10 parts by weight, preferably 3 to 5 parts by weight, with respect to 100 parts by weight of the butyl rubber.

The sealant 2 having the aforementioned composition is formed by cross-linking a composition based on the butyl rubber with a vulcanizing agent, thereby causing no great variation in viscosity even at a high temperature and concentration or spreading of sealant caused by centrifugal force generated during tire rotation. Also, the sealant 2 has a strong adhesive force and temperature stability to an extent that the tire can sufficiently endure against exterior stimuli during travel.

The sealant layer 2 has a thickness of 1 to 5 mm, thus exhibiting superior adhesion of the sound-absorbing material and excellent buffering action against shear deformation between the tire and the sound-absorbing material, and enabling automatic sealing of puncture generated by nails or bumps with a size of 5 mm or less.

Also, a thickness ratio of the sealant layer 2 and the sound-absorbing material 3 is 1:1 to 1:3. When the thickness ratio of the sealant layer 2 to the sound-absorbing material 3 is within the range defined above, separation of the sealant layer 2 and the sound-absorbing material 3 can be prevented, although tires are driven even under harsh conditions.

Also, the width of the sealant layer 2 is preferably the same as the width of the sound-absorbing material 3 and is 100 to 120% with respect to the width of the tire tread.

The pneumatic tire according to the present invention having the configuration described above may be produced using a sound-absorbing material for reducing noise, including a porous sound-absorbing material, a sealant layer and a release paper laminated in this order.

That is, a method for manufacturing a pneumatic tire according to one embodiment of the present invention includes producing a sound-absorbing member for reducing noise including a porous sound-absorbing material, a sealant layer and a release paper laminated in this order, removing the release paper from the sound-absorbing member for reducing noise, and adhering the sound-absorbing member for reducing noise to the inside surface of an inner liner of the tire such that the sound-absorbing member faces the sealant layer. Any of methods for producing tires before adhesion of the sound-absorbing member may be used as long as the method is conventionally used for production of tires and detailed description thereof is thus omitted.

FIG. 2 is a schematic view illustrating a configuration of a sound-absorbing member for reducing noise used for production of the pneumatic tire according to another embodiment of the present invention. Referring to FIG. 2, the sound-absorbing member for reducing noise includes a porous sound-absorbing material 3, a sealant layer 2 and a release paper 4 laminated in this order and may be produced by a method including mixing butyl rubber, polyisobutylene, an inorganic additive and a vulcanizing agent to prepare a composition for forming a sealant, applying the composition for forming the sealant to one surface of the porous sound-absorbing material to form a sealant layer, and laminating the release paper on the sealant layer.

The types and contents of butyl rubber, polyisobutylene, the inorganic additive and the vulcanizing agent constituting the composition for forming the sealant have been described above, and the composition may further contain other additive, if desired. The type and content of the other additive have been described above.

The sealant layer that is finally produced on one surface of the porous sound-absorbing material, after mixing the butyl rubber, polyisobutylene, the inorganic additive, the vulcanizing agent and optionally other additive to prepare a composition for forming the sealant is applied in an amount allowing the final thickness to be 1 to 5 mm, followed by cross-linking at a high temperature of 140 to 180°C.

Then, the release paper produced through cross-linkage is laminated on the sealant layer. The release paper is paper or a polyester film coated with a release agent such as polyethylene or silicone on the surface thereof that contacts the sealant and is removed from the sealant before the sound-absorbing member for reducing noise is adhered to the tire.

As such, since the production method according to the present invention uses the sound-absorbing member having the configuration described above, the pneumatic tire including the porous sound-absorbing member capable of reducing noise by adhering the sealant layer to the inside wall of the inner liner disposed inside the completed tire, while removing the release paper through detachment, can be easily produced.

The pneumatic tire according to the present invention may be a car tire, a racing tire, an airplane tire, an agricultural tire, an off-road tire, a truck tire, a bus tire or the like. Preferably, a car tire is used. Also, the tire may be a radial tire or a bias tire and is preferably a radial tire.

### Examples

### [Production Example: Production of sound-absorbing member for reducing noise]

### (Examples 1 to 3)

Components were mixed in accordance with the composition listed in the following Table 1 to prepare a composition for forming a sealant, the composition was applied to one surface of the porous sound-absorbing material (foamed urethane) having a thickness of 8 mm, and cross-linkage was performed at a high temperature of 170°C to form a sealant layer having a thickness of 4 mm. A release paper was laminated on the formed sealant layer having the same area as that of the sealant layer.

The release paper was detached from the produced sound-absorbing member for reducing noise, and, as shown in FIG. 1, the sealant layer was adhered to the sound-absorbing member for reducing noise such that the sealant layer faced the inside surface of an inner liner in a tire (specification: 235/45R17, produced by Hankook Tire Co., Ltd.), to produce a tire.

### (Comparative Example 1)

The tire (specification: 235/45R17A) excluding a composition for forming a sealant and a porous sound-absorbing material was used as Comparative Example 1.

### (Comparative Example 2)

A sealant layer was formed in the same manner as in Example 1, except that an adhesive fluid solution containing polybutene and terpene resins as main components was used.

### (Comparative Examples 3 and 4)

A composition for forming the sealant was prepared in the same manner as in Example 1 in accordance with the composition listed in the following Table 1.

**TABLE 1**

| Raw material | Ex. 1 | Ex. 2 | Ex. 3 | Comp. Ex. 3 | Comp. Ex. 4 |
|---|---|---|---|---|---|
| Butyl rubber | 100 | 100 | 100 | 100 | 100 |
| Polyisobutylene (MW=2300) | 300 | 100 | 400 | 50 | 500 |
| Carbon black (N330) | 40 | 40 | 40 | 40 | 40 |
| ZnO | 5 | 5 | 5 | 5 | 5 |
| Stearic acid | 1 | 1 | 1 | 1 | 1 |
| Sulfur | 5 | 5 | 5 | 5 | 5 |
| Accelerator¹⁾ | 2 | 2 | 2 | 2 | 2 |

| | | | | | |
|---|---|---|---|---|---|
| (Unit: parts by weight) 1) Accelerator: Zinc dibenzyldithiocarbamate (ZBEC) | | | | | |

### [Experimental Example 1: Evaluation of noise reduction according to increase in speed]

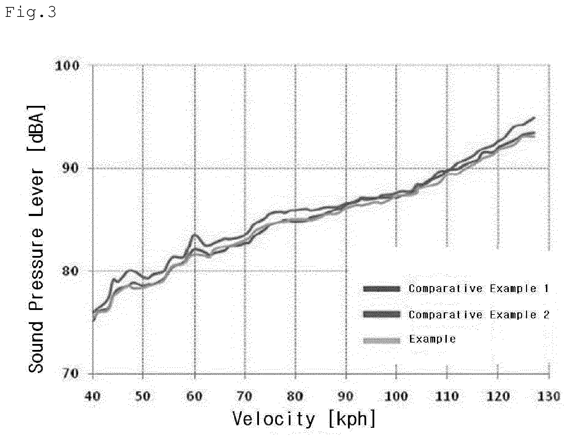

The tires produced in examples were mounted on a regular rim and noise reduction according to increase in speed was observed using a test apparatus (Chassis Dynamo) under regular air pressure conditions. The results thus obtained are shown in FIG. 3.

As can be seen from FIG. 3, tires according to the present invention exhibited equivalent levels of effects to Comparative Example 2 from low-speed driving to high-speed driving, while Comparative Example 1 exhibited a noise reduction effect of about 5dB or more.

### [Experimental Example 2: Evaluation of noise reduction according to increase in speed]

The tires produced in examples were subjected to protrusion pass (cleat impact) testing. Cleat impact testing was performed using a cleat impact test apparatus and resonance sounds in the tires were measured while the tires passed through a protrusion at predetermined intervals.

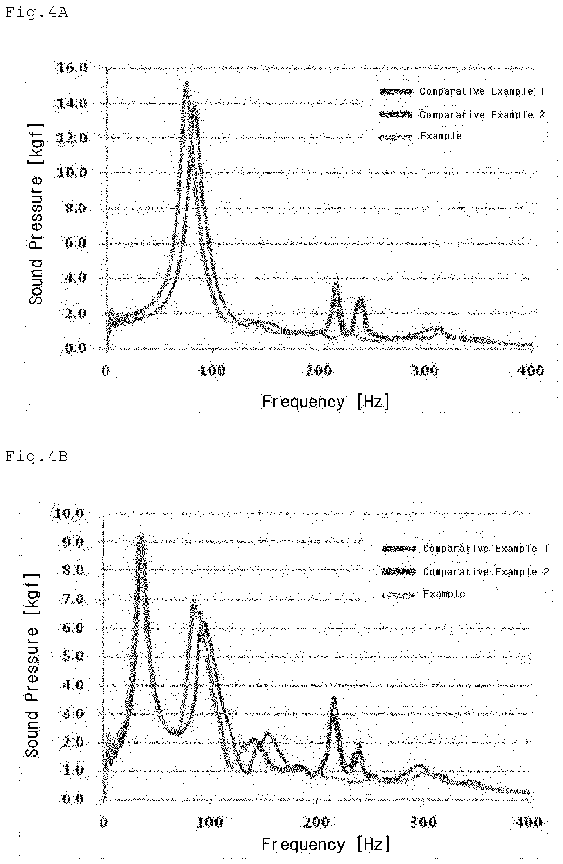

Tires of the present invention were compared with a general tire and a sealant tire used as Comparative Examples 1 and 2, respectively. The results are shown in FIGS. 4A and 4B.

Referring to FIGS. 4A and 4B, as a result of cleat impact testing, the tires of Comparative Examples 1 and 2 exhibited resonance sound peaks within a tire primary resonance frequency range (200 to 300Hz) that amplifies noise, while the tires according to the present invention did not exhibit resonance sounds. Furthermore, noise generated from tires of the examples exhibited a low frequency and a low sound pressure, as compared to Comparative Examples 1 and 2. These results indicated that noise of tires according to examples of the present invention was low and the noise had a low sound pressure.

Also, it could be seen that adhesion states of the sound-absorbing material and sealant after further driving were observed by the naked eye. As a result of observation, both the sound-absorbing material and the sealant were suitably adhered to the tire according to the embodiment of the present invention.

### [Experimental Example 3: Evaluation of vibration generation according to driving]

Generation of vibration was evaluated on the tires of Examples 1 to 3 and Comparative Example 2. The results are indexed based on the result of Comparative Example 2 and are shown in the following Table 2.

**TABLE 2**

| | Ex. 1 | Ex. 2 | Ex. 3 | Comp. Ex. 2 |
|---|---|---|---|---|
| Generation of vibration | 115 | 109 | 113 | 100 |

As can be seen from Table 2, vibration was not generated in Examples 1 to 3, while vibration was generated in Comparative Example 2. Comparative Example 2 had flowability, since the sealant layer did not contain a tire rubber layer. Accordingly, the sealant was moved and concentrated in a central region in the width direction of the tire by high-speed driving of tires, or the tread was repeatedly deformed on the contact surface and thus mal-distributed, causing deterioration in tire uniformity.

### [Experimental Example 4: Measurement of adhesion and buffering effects of sealant layer]

The adhesion performance and buffering effects of the tires of Examples 1 to 3 and Comparative Examples 3 and 4 were measured. The results are indexed, based on Comparative Example 3 and are shown in the following Table 3.

**TABLE 3**

| | Ex. 1 | Ex. 2 | Ex. 3 | Comp. Ex. 3 | Comp. Ex. 4 |
|---|---|---|---|---|---|
| Adhesion performance | 130 | 121 | 127 | 100 | 102 |
| Buffering performance | 111 | 107 | 110 | 100 | 101 |

As can be seen from Table 3, Examples 1 to 3 exhibited superior adhesion performance and buffering performance, as compared to Comparative Examples 3 and 4. In particular, in Comparative Examples 3 and 4, the porous sound-absorbing materials were detached from the sealant layer. The cause of this is believed to be that the content of polyisobutylene was not 100 to 400 parts by weight, with respect to 100 parts by weight of the butyl rubber.

### [Experimental Example 5: Measurement of adhesion and buffering effects of sealant layer under harsh conditions]

Meanwhile, tires of Examples 4 to 7 were produced in the same manner as in Example 1, except that the composition for forming the sealant was applied to one surface of porous sound-absorbing materials having thicknesses of 2 mm, 4 mm, 12 mm and 16 mm to form a sealant layer having a thickness of 4 mm.

Adhesion performance of the sealant layer was measured under harsh conditions with respect to the tires of Example 1 and Examples 4 to 7. The results are indexed and are shown in the following Table 4.

**TABLE 4**

| | Ex. 1 | Ex. 4 | Ex. 5 | Ex. 6 | Ex. 7 |
|---|---|---|---|---|---|
| Thickness ratio (sealant layer: sound-absorbing material) | 1:2 | 1:0.5 | 1:1 | 1:3 | 1:4 |
| Adhesion performance | 107 | 100 | 105 | 104 | 102 |

As can be seen from Table 4, Examples 1, 5 and 6 did not deteriorate in adhesion performance even under harsh conditions, while Examples 4 and 7 deteriorated in adhesion performance under harsh conditions.

The pneumatic tire according to the present invention comprises a porous sound-absorbing material adhered via a sealant layer to the inside surface of an inner liner, thus effectively reducing noise generated by resonance and vibration in tires for vehicles.

Also, the pneumatic tire according to the present invention comprises a sealant obtained by adding sulfur to a composition containing butyl rubber as a main component, followed by cross-linkage, thus causing no substantial variation in viscosity even at high temperature and concentration or spreading of sealant caused by centrifugal force generated during tire rotation. Also, the sealant has a strong adhesive force and temperature stability to an extent that the tire can sufficiently withstand an exterior force during tire travelling.

Also, the pneumatic tire according to the present invention comprises a sealant layer with an optimum thickness, thus exhibiting superior buffering action between the tire and the sound-absorbing material and enabling automatic sealing of puncture generated by exterior stimuli such as nails or bumps with a size of 5 mm or less.

Also, the method for manufacturing the pneumatic tire according to the present invention uses a sound-absorbing member for reducing noise including a porous sound-absorbing material, a sealant layer and a release paper laminated in this order, thereby easily producing a pneumatic tire comprising the porous sound-absorbing material.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A pneumatic tire (1) comprising:
a porous sound-absorbing material (3) adhered via a sealant layer (2) to the inside surface of an inner liner, **characterized in that** the sealant layer (2) comprises butyl rubber, 100 to 400 parts by weight of polyisobutylene, 10 to 100 parts by weight of an inorganic additive and 1 to 15 parts by weight of a vulcanizing agent, with respect to 100 parts by weight of the butyl rubber.

2. The pneumatic tire (1) according to claim 1, wherein the polyisobutylene has a weight average molecular weight of 1000 to 3000 g/mol.

3. The pneumatic tire (1) according to claim 1, wherein the inorganic additive is selected from the group consisting of carbon black, silica, calcium carbonate, calcium silicate, magnesium oxide, aluminum oxide, barium sulfate, talc, mica and mixtures thereof.

4. The pneumatic tire (1) according to claim 1, wherein the sealant layer (2) has a thickness of 1 to 5 mm.

5. The pneumatic tire (1) according to claim 1, wherein a thickness ratio of the sealant layer (2)and the porous sound-absorbing material (3) is 1:1 to 1:3.

6. The pneumatic tire (1) according to claim 1, wherein the porous sound-absorbing material (3) is selected from the group consisting of sponge, a polyester-based non-woven fabric, a polystyrene-based non-woven fabric and a laminate thereof.

7. A method for manufacturing a pneumatic tire (1), comprising:
producing a sound-absorbing member for reducing noise comprising a sound-absorbing material (3), a sealant layer (2) and a release paper (4) laminated in this order; and
removing the release paper (4) from the sound-absorbing member for reducing noise and adhering the sound-absorbing member to the inside surface of the tire (1) such that the sound-absorbing member faces the sealant layer (2),
wherein the sealant layer (2) comprises butyl rubber, 100 to 400 parts by weight of polyisobutylene, 10 to 100 parts by weight of an inorganic additive and 1 to 15 parts by weight of a vulcanizing agent, with respect to 100 parts by weight of the butyl rubber.

8. The method according to claim 7, wherein the sound-absorbing member for reducing noise is produced by a production method comprising mixing butyl rubber, polyisobutylene, an inorganic additive and a vulcanizing agent to prepare a composition for forming the sealant, applying the composition for forming the sealant to one surface of the porous sound-absorbing material (3) to form a sealant layer (2), and laminating the release paper (4) on the sealant layer (2).

9. The method according to claim 8, wherein the sealant layer (2) is produced by cross-linking the composition for forming the sealant at a temperature of 140 to 180°C.

10. The method according to claim 8, wherein the release paper (4) is paper or a polyester film coated with polyethylene or silicone as a releasing agent.

## Patentansprüche

1. Luftreifen (1), umfassend:
ein poröses schallabsorbierendes Material (3), das über eine Dichtungsschicht (2) an der Innenseite einer Innenabdichtung haftet
und **dadurch gekennzeichnet, dass** die Dichtungsschicht (2) Butylkautschuk und bezogen auf 100 Gewichtsanteile des Butylkautschuks 100 bis 400 Gewichtsanteile Polyisobutylen, 10 bis 100 Gewichtsanteile eines anorganischen Zusatzes und 1 bis 15 Gewichtsanteile eines Vulkanisiermittels aufweist.

2. Luftreifen (1) gemäß Anspruch 1, wobei das Polyisobutylen ein Massenmittel von 1000 bis 3000 g/mol aufweist.

3. Luftreifen (1) gemäß Anspruch 1, wobei der anorganische Zusatz aus Ruß, Siliciumdioxid, Calciumcarbonat, Calciumsilicat, Magnesiumoxid, Aluminiumoxid, Bariumsulfat, Talk, Glimmer und Mischungen davon besteht.

4. Luftreifen (1) gemäß Anspruch 1, wobei die Dichtungsschicht (2) eine Stärke von 1 bis 5 mm aufweist.

5. Luftreifen (1) gemäß Anspruch 1, wobei das Dickenverhältnis der Dichtungsschicht (2) und des porösen schallabsorbierenden Materials (3) 1:1 bis 1:3 beträgt.

6. Luftreifen (1) gemäß Anspruch 1, wobei das poröse schallabsorbierende Material (3) aus einem Schaumstoff, einem Faservlies auf Polyesterbasis, einem Faservlies auf Polystyrolbasis und einem daraus hergestellten Laminat besteht.

7. Verfahren zum Herstellen eines Luftreifens (1), umfassend:
Herstellen eines schallabsorbierenden Elements zum Reduzieren von Geräusch, umfassend ein schallabsorbierendes Material (3), eine Dichtungsschicht (2) und ein Antihaftpapier, laminiert in dieser Reihenfolge (4); und
Entfernen des Antihaftpapiers (4) vom schallabsorbierenden Element zum Reduzieren von Geräusch und das schallabsorbierende Element an der Innenseite des Reifens (1) so anhaften, dass das schallabsorbierende Element der Dichtungsschicht (2) zugewandt ist,
wobei die Dichtungsschicht (2) Butylkautschuk und bezogen auf 100 Gewichtsanteile des Butylkautschuks 100 bis 400 Gewichtsanteile Polyisobutylen, 10 bis 100 Gewichtsanteile eines anorganischen Zusatzes und 1 bis 15 Gewichtsanteile eines Vulkanisiermittels aufweist.

8. Verfahren gemäß Anspruch 7, wobei das schallabsorbierende Element zum Reduzieren von Geräusch durch ein Herstellungsverfahren hergestellt wird, welches das Mischen von Butylkautschuk, Polyisobutylen, einem anorganischen Zusatz und einem Vulkanisationsmittel umfasst, um eine Zusammensetzung zur Bildung des Dichtungsmittels herzustellen, das Dichtungsmittel an einer Oberfläche des porösen schallabsorbierenden Materials (3) aufzubringen, um eine Dichtungsschicht (2) zu bilden und das Antihaftpapier (4) auf die Dichtungsschicht (2) zu laminieren.

9. Verfahren gemäß Anspruch 8, wobei die Dichtungsschicht (2) zur Bildung des Dichtungsmittels durch Vernetzung der Zusammensetzung bei einer Temperatur von 140 bis 180 °C hergestellt wird.

10. Verfahren gemäß Anspruch 8, wobei das Antihaftpapier (4) als Trennmittel aus Papier oder einer mit Polyethylen oder Silikon beschichteten Polyesterfolie besteht.

## Revendications

1. Un bandage pneumatique (1) comprenant :
un matériau d'absorption acoustique poreux (3) collé
par une couche d'étanchéité (2) à la surface intérieure d'un revêtement interne, **caractérisé en ce que** la couche d'étanchéité (2) comprend le caoutchouc butyle, 100 à 400 pièces en poids de polyisobutylène, 10 à 100 pièces en poids d'un additif inorganique et 1 à 15 Pièces en poids d'un agent de vulcanisation, par rapport à 100 pièces en poids du caoutchouc butyle.

2. Le bandage pneumatique (1) selon la revendication 1, dans laquelle le polyisobutylène a un poids moléculaire moyen en poids de 1000 à 3000 g/mol.

3. Le bandage pneumatique (1) selon la revendication 1, dans laquelle l'additif inorganique est choisi dans le groupe constitué par le noir de carbone, la silice, le carbonate de calcium, le silicate de calcium, l'oxyde de magnésium, l'oxyde d'aluminium, le sulfate de baryum, le talc, le mica et leurs mélanges.

4. Le bandage pneumatique (1) selon la revendication 1, dans laquelle la couche d'étanchéité (2) a une épaisseur de 1 à 5 mm.

5. Le bandage pneumatique (1) selon la revendication 1, dans laquelle le rapport d'épaisseur de la couche d'étanchéité (2) et du matériau d'absorption acoustique poreux (3) est de 1/1 à 1/3.

6. Le bandage pneumatique (1) selon la revendication 1, dans laquelle le matériau d'absorption acoustique poreux (3) est choisi dans le groupe constitué par une éponge, un tissu non tissé à base de polyester, un tissu non tissé à base de polystyrène et d'un stratifié de celui-ci.

7. Procédé de fabrication d'un bandage pneumatique (1), comprenant :
production d'élément d'absorption acoustique pour réduire le bruit, comprenant un matériau d'absorption acoustique (3), une couche d'étanchéité (2) et un papier antiadhésif (4) stratifiés dans cet ordre ; et retirez le papier antiadhésif (4) de l'élément d'absorption acoustique pour réduire le bruit et faire adhérer l'élément d'absorption acoustique à la surface intérieure du pneu (1) de sorte que l'élément d'absorption acoustique soit face à la couche d'étanchéité (2), dans laquelle la couche d'étanchéité (2) comprend du caoutchouc butyle, de 100 à 400 pièces en poids de polyisobutylène, de 10 à 100 pièces en poids d'un additif inorganique et de 1 à 15 pièces en poids d'un agent de vulcanisation par rapport à 100 pièces en poids du caoutchouc butyle.

8. Procédé selon la revendication 1, dans laquelle l'élément d'absorption acoustique pour réduire le bruit est produit par un procédé de production comprenant le mélange de caoutchouc butyle, le polyisobutylène, un additif inorganique et un agent de vulcanisation pour préparer une composition pour former le matériau d'étanchéité, à appliquer à la composition pour former le matériau d'étanchéité à une surface du matériau absorbant acoustique poreux (3) pour former une couche d'étanchéité (2), et la stratification du papier antiadhésif (4) sur la couche d'étanchéité (2).

9. Procédé selon la revendication 8, dans laquelle la couche de matériau d'étanchéité (2) est produite par réticulation de la composition pour former le matériau d'étanchéité à une température de 140 à 180 °C.

10. Procédé selon la revendication 8, dans laquelle le papier antiadhésif (4) est du papier ou un film de polyester revêtu de polyéthylène ou de silicone comme agent de démoulage.
